# EUROPÄISCHE PATENTSCHRIFT

(11) **EP 2 864 137 B1**
(45) Veröffentlichungstag und Bekanntmachung des Hinweises auf die Patenterteilung: **26.10.2016**
(21) Anmeldenummer: 13728173.9
(22) Anmeldetag: 11.06.2013
(51) Int. Cl.: B60C 11/12

(54) **LAUFSTREIFENPROFIL EINES FAHRZEUGREIFENS**
TREAD PORTION OF A TYRE
BANDE DE ROULEMENT DE PNEUMATIQUE

(30) Priorität: 25.06.2012 DE 102012105515
(43) Veröffentlichungstag der Anmeldung: 29.04.2015
(73) Patentinhaber: Continental Reifen Deutschland GmbH, 30165 Hannover (DE)
(72) Erfinder: WÜST, Alexander, 30926 Seelze (DE); GONCALVES ANKIEWICZ, Amelia Olga, 30559 Hannover (DE); POKUTTA-PASKALEVA, Anastassia, 30161 Hannover (DE); BUCHINGER-BARNSTORF, Thomas, 30974 Wennigsen (DE); FERNANDEZ, Tomas, 30177 Hannover (DE); RITTWEGER, Stefan, 30163 Hannover (DE); DOBCZYK, Klaudia, 30173 Hannover (DE)
(74) Vertreter: Finger, Karsten
(86) Internationale Anmeldenummer: PCT/EP2013/061938
(87) Internationale Veröffentlichungsnummer: WO 2014/001069

(56) Entgegenhaltungen:
- EP-A2- 0 705 721
- WO-A1-2010/144091

## Beschreibung

Die Erfindung betrifft ein Laufstreifenprofil eines Fahrzeugreifens mit Profilpositiven wie Profilblöcken oder Laufstreifenbändern, welche wenigstens einen Feineinschnitt aufweisen, welcher sich von der Laufstreifenperipherie nach radial innen erstreckt und in seinem Tiefenverlauf im Wesentlichen aus zwei aneinander angrenzenden Abschnitten besteht:
- einem ersten Abschnitt, welcher von der Laufstreifenperipherie aus beginnt und in welchem der Feineinschnitt in etwa eine gleichbleibende Breite aufweist,
- einem zweiten Abschnitt, welcher sich an den ersten Abschnitt anschließt und in welchem der Feineinschnitt in wenigstens einem Bereich eine größere Breite als in dem ersten Abschnitt aufweist,
und wobei der Übergang von dem ersten Abschnitt zu dem zweiten Abschnitt durch Radien gebildet ist und wobei der Feinschnitt radial verlaufende Verengungen aufweist, welche über die Längserstreckung des Feineinschnittes beabstandet voneinander angeordnet sind.

Ein derartiges Laufstreifenprofil ist beispielsweise aus der WO 2010/144091 A1 und aus der EP 0 705 721 A2 bekannt.

Feineinschnitte dienen beispielsweise bei Nutzfahrzeugreifen dazu, bei nasser Fahrbahn den Wasserfilm zu zertrennen, um bessere Nasseigenschaften dieses Laufstreifens zu erhalten.

Bei PKW-Reifen sind die Feineinschnitte bei Fahrzeugreifen für den Einsatz unter winterlichen Fahrbedingungen ausgebildet und dienen beispielsweise dazu, die Fahreigenschafen auf winterlicher Fahrbahn zu verbessern, indem vermehrt Griffkanten zur Verfügung gestellt werden und indem der in den Feineinschnitten aufgenommene Schnee die Haftung des Reifens durch eine Schnee-Schnee-Verzahnung erhöht.

Weiterhin offenbart die EP 1 676 695 A2 ein Laufstreifenprofil, welches Profipositive mit Feineinschnitten aufweist. Die Feineinschnitte verlaufen von der Laufstreifenperipherie beginnend in radialer Richtung. In einem ersten Abschnitt, welcher von der Laufstreifenoberfläche an beginnt, ist die Breite des Feineinschnittes in etwa gleich, während die Breite in dem zweiten, an diesen ersten Abschnitt anschließenden Abschnitt größer und hier oval ist. Derartige Feineinschnitte werden ebenfalls als "raindrop-" oder als "Schlüsselloch"-Feineinschnitte bezeichnet.

Durch die Verbreiterung des Feineinschnittes nach radial innen wird im angefahrenen Zustand des Laufstreifenprofils zusätzliches Leervolumen zur Verfügung gestellt, was insbesondere für die Nässeeigenschaften des Reifens von Vorteil ist. Das durch den Abrieb des Laufstreifenprofils verringerte Leervolumen wird durch die größere Breite des Feineinschnittes in dessen radial innen angeordneten zweiten Abschnitt "ausgeglichen". Das Wasser der Fahrbahnoberfläche kann trotz geringerer Profiltiefe darin gut aufgenommen werden.

Man ist bestrebt, die Fahreigenschaften des Reifens, insbesondere die Wintereigenschaften bei über der Lebensdauer des Laufstreifenprofils gleichbleibendem Profil- Leervolumen weiter zu verbessern.

Es ist die Aufgabe der Erfindung, ein Laufstreifenprofil eines Fahrzeugreifens zur Verfügung zu stellen, das über dessen Lebensdauer ein gleichbleibendes Leervolumen sowohl verbesserte Wintereigenschaften als auch verbesserte Nass- und Trockenbremseigenschaften aufweist.

Gelöst wird die Aufgabe, indem die Verengungen über den gesamten Tiefenverlauf des Feineinschnittes ausgebildet sind.

Es ist erfindungsgemäß ein Laufstreifenprofil mit Feineinschnitten geschaffen, welche in ihr Leervolumen hineinreichende "Abstandshalter" aufweist. Die "Abstandshalter" sind durch die Verengungen gebildet. Die Abstandshalter reichen in das Leervolumen hinein, nehmen jedoch nur einen Teil der Breite des Feineinschnittes ein. Durch die Verengungen in Funktion von Abstandshaltern ist ein vollständiges Schließen des Feineinschnittes im Reifendurchlauf verhindert.

Im Durchlauf des Reifens auf der Fahrbahnoberfläche verformen sich die Profilpositive des Laufstreifens. Die Art und Intensität dieser Verformung wird u.a. durch die Geometrie der in diesem Profilpositiv angeordneten Feineinschnitte bestimmt. Bei dem erfindungsgemäßen Laufstreifen verbleibt während der Verformung des Profilpositivs immer eine Öffnung der Feineinschnitte, weil die Verengungen als Abstandshalter beim Schließen des Feineinschnittes wirken und somit ein vollständiges Verschließen des Feineinschnittes verhindern. In dieser verbleibenden Öffnung kann für gute Fahreigenschaften auf winterlicher Fahrbahn Schnee aufgenommen werden, wodurch eine vorteilhafte Schnee-Schnee-Reibung und somit eine vorteilhafte Haftung erreicht ist. Andererseits sind die Öffnungen auf nasser Fahrbahn vorteilhaft, weil Wasser in diesen Öffnungen aufgenommen werden kann. Zudem sind durch die verbleibenden Öffnungen mehr Kanten zur Verfügung gestellt, wodurch verbesserte Trocken- und Nassbremseigenschaften erhalten sind.

"Axiale Richtung" meint die Richtung entlang der Reifenachse.
"Umfangsrichtung" meint die Richtung entlang des Reifenabrollens.
"Radiale Richtung" meint die Richtung vom Reifenmittelpunkt zum Laufstreifen.
"Breite des Feineinschnittes" meint die Ausdehnung eines Feineinschnittes quer zu seiner Längserstreckung.
"Profiltiefe" oder "Feineinschnitttiefe" meint die maximale Differenz in radialer Richtung zwischen Elementen eines Profils bzw. eines Feineinschnittes.

Zweckmäßig ist es, wenn der zweite Abschnitt im Querschnitt die Form eines Dreieckes, eines Ovals, eines Kreises oder eines Rechteckes aufweist, wobei Ecken vorzugsweise gerundet ausgebildet sind. Die Rundungen verbessern die Entformbarkeit und vermeiden Kerbwirkungen in dem Laufstreifenprofil.

Zweckmäßig ist es, wenn der erste Abschnitt eine radiale Erstreckung von mindestens 2 mm bis 19,5 mm aufweist, vorzugsweise bei einem Laufstreifenprofil eines PKW-Reifens zwischen 2 mm und 5 mm und vorzugsweise bei einem Laufstreifenprofil eines LKW-Reifens zwischen 5 mm und 19,5 mm. Dieser erste Bereich dient zur Abstützung beim Trockenbremsen und weist mit den vorgenannten Abmessungen hierfür optimale Eigenschaften auf.

Zweckmäßig ist es, wenn der zweite Abschnitt eine radiale Erstreckung von mindestens 2 mm bis 11 mm aufweist, vorzugsweise bei einem Laufstreifenprofil eines PKW-Reifens zwischen 2 mm und 6 mm und vorzugsweise bei einem Laufstreifenprofil eines LKW-Reifens zwischen 2 mm und 11 mm. Über die Lebensdauer des Laufstreifenprofils werden zusätzliche Rillen an dessen Oberfläche frei.

Vorteilhaft ist es, wenn zwei bis zehn Verengungen pro Feineinschnitt vorgesehen sind, vorzugsweise bei einem Laufstreifenprofil eines PKW-Reifens zwischen zwei und fünf Verengungen und vorzugsweise bei einem Laufstreifenprofil eines LKW-Reifens zwischen vier und zehn Verengungen. Hierdurch ist erreicht, dass die Feineinschnitte zuverlässig in ihrem oberen Bereich unter Last offen gehalten werden.

Zweckmäßig ist es, wenn die Verengungen an beiden Feineinschnittwänden symmetrisch und gegengleich angeordnet sind. Der Effekt des Abstandshaltens ist hierdurch am stärksten, da von beiden Feineinschnittwänden an gegengleichen Positionen in das Leervolumen des Feineinschnittes hinein "Abstandshalter" angeordnet sind, also zwei gegenüberliegende und miteinander wirkende Abstandshalter vorhanden sind.

Zweckmäßig ist es, wenn die Übergänge zu der Verengung durch Radien gebildet sind. Hierdurch sind Kerbwirkungen, die die Lebensdauer des Reifens herabsetzten könnten, vermieden.

Vorteilhaft ist es, wenn der Feineinschnitt im ersten Abschnitt außerhalb der Verengungen eine Breite (b1) von 0,4 mm bis 2,5 mm, vorzugsweise bei einem Laufstreifenprofil eines PKW-Reifens zwischen 0,4 mm und 1,8 mm, besonders bevorzugt von 0,8 mm und vorzugsweise bei einem Laufstreifenprofil eines LKW-Reifens zwischen 0,8 mm und 2,5 mm, besonders bevorzugt von 1,2 mm aufweist. Diese Breiten sind optimal für die Funktion des Reifens und für die Stabilität der Lamellenbleche in der Vulkansisierform.

Vorteilhaft ist es, wenn der Feineinschnitt (1) im ersten Abschnitt im Bereich der Verengung eine Breite (b1E) von 0,1 mm bis 1 mm, vorzugsweise bei einem Laufstreifenprofil eines PKW-Reifens zwischen 0,1 mm und 0,5 mm, besonders bevorzugt von 0,3 mm und vorzugsweise bei einem Laufstreifenprofil eines LKW-Reifens zwischen 0,5 mm und 1 mm aufweist. Der Feineinschnitt bleibt unter Last des Laufstreifenprofils zuverlässig offen.

Vorteilhaft ist es, wenn die Verengungen einen Abstand von 5 mm bis 30 mm aufweisen, gemessen in Längserstreckung des Feineinschnittes. Der Abstand bemisst sich vom Beginn einer Verengung bis zum Beginn der benachbarten Verengung.

Zweckmäßig ist es, wenn die Tiefe der Verengung, gemessen senkrecht auf der Feineinschnittwand von dieser beginnend, über den radialen Verlauf des Feineinschnittes gleich ist.

Ein derartiges Laufstreifenprofil ist in einem Fahrzeugreifen, vorzugsweise einen Nutzfahrzeugreifen oder einem PKW-Reifen einzusetzen.

Weitere Merkmale, Vorteile und Einzelheiten der Erfindung werden anhand der Zeichnungen, die schematische Ausführungsbeispiele darstellen, näher beschrieben. Dabei zeigt die
Fig. 1 eine dreidimensionale Darstellung eines Feineinschnittes eines Laufstreifenprofils;
Fig. 2 eine dreidimensionale Darstellung eines anderen Feineinschnittes eines Laufstreifenprofils.

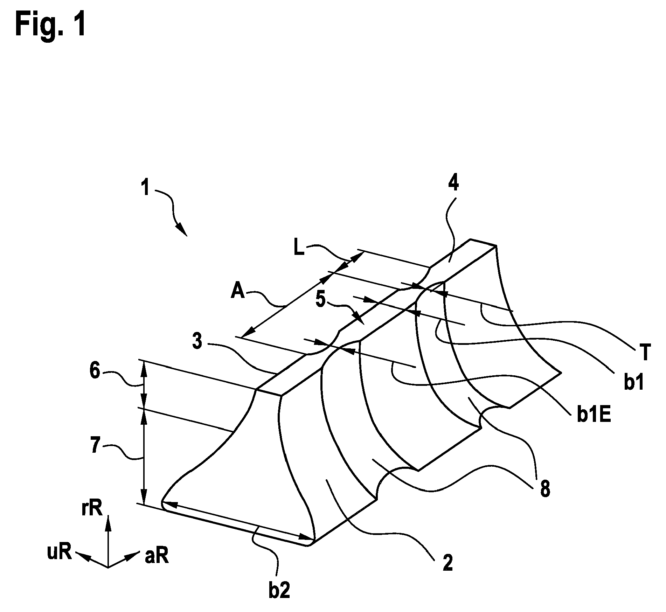

Die **Fig. 1** zeigt eine dreidimensionale Darstellung eines Feineinschnittes 1 eines Laufstreifenprofils eines PKW-Reifens. Dargestellt sind die beiden Feineinschnittwände 2, 3, welche zwischen sich ein Leervolumen 4 einschließen. Der Feineinschnitt 1 erstreckt sich von der Laufstreifenperipherie 5 nach radial innen und besteht in seinem Tiefenverlauf in radialer Richtung rR im Wesentlichen aus zwei aneinander angrenzenden Abschnitten. Ein erster Abschnitt 6 beginnt von der Laufstreifenperipherie 5 aus, weist in etwa eine gleichbleibende Breite b1 von 0,8 mm auf, gemessen außerhalb der Verengungen und erstreckt sich in radialer Richtung über 3 mm. Der zweite Abschnitt 7 schließt an den ersten Abschnitt 6 an und weist eine größere maximale Breite b2 als der erste Abschnitt 6 auf. Der zweite Abschnitt 7 weist eine radiale Erstreckung von 3 mm auf. Der zweite Abschnitt 7 weist im Querschnitt die Form eines Dreieckes mit gerundeten Ecken auf. Der Übergang von dem ersten Abschnitt 6 zu dem zweiten Abschnitt 7 ist durch Radien gebildet. Der Feineinschnitt1 weist radial verlaufende Verengungen 8 auf, welche über die Längserstreckung des Feineinschnittes 1 beabstandet voneinander angeordnet sind. In dem Feineinschnitt 1 sind zwei Verengungen 8 vorgesehen, welche an beiden Feineinschnittwänden 2, 3 symmetrisch und gegengleich angeordnet sind. Die Übergänge zu der Verengung 8 sind durch Radien gebildet. Die Verengungen vorringern die Breite b1. Der Feineinschnitt 1 weist im ersten Abschnitt 6 im Bereich der Verengung 8 eine Breite b1E von 0,2 mm auf. Die Verengungen 8 haben einen Abstand A von 6 mm, gemessen in Längserstreckung des Feineinschnittes. Die Tiefe der Verengung T, gemessen senkrecht auf die Feineinschnittwand, welche die Verengung 8 aufweist, beträgt 0,3 mm und ist über den radia en Verlauf des Feineinschnittes 1 gleich.

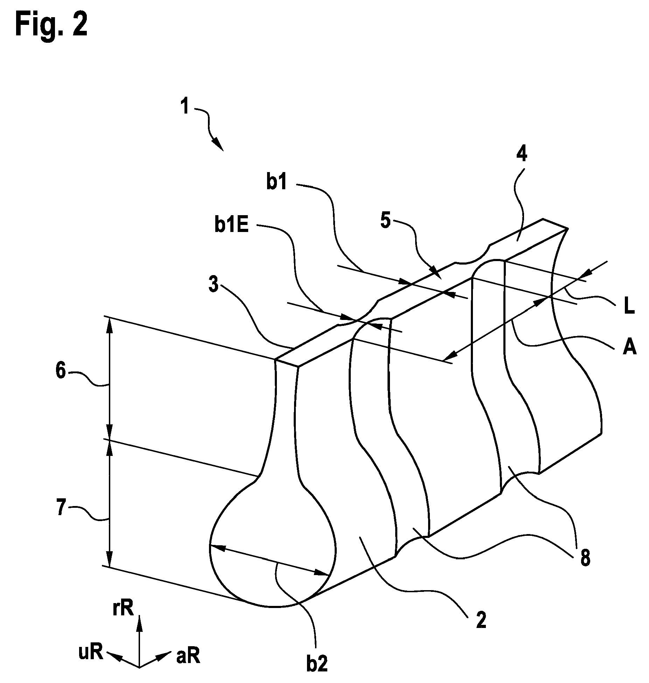

Die Fig. 2 zeigt eine dreidimensionale Darstellung eines anderen Feineinschnittes 1 eines Laufstreifenprofils. Der Feineinschnitt der Fig. 2 unterscheidet sich darin von dem Feineinschnitt der Fig. 1, dass der Querschnitt des 2. Abschnittes 7 kreisförmig ist.

### Bezugszeichenliste

### (Teil der Beschreibung)

- 1: Feineinschnitt
- 2: Feineinschnittwand
- 3: Feineinschnittwand
- 4: Leervolumen
- 5: Laufstreifenperipherie
- 6: 1. Abschnitt
- 7: 2. Abschnitt
- 8: Einengung

- b1: Breite des Feineinschnittes im 1. Abschnitt außerhalb der Einengung
- b1E: Breite des Feineinschnittes im 1. Abschnitt innerhalb der Einengung
- b2: maximale Breite des Feineinschnittes im 2. Abschnitt
- A: Abstand zweier Verengungen
- L: Länge einer Verengung
- T: Tiefe der Einengung
- rR: radiale Richtung
- aR: axiale Richtung
- uR: Umfangsrichtung

## Patentansprüche

1. Laufstreifenprofil eines Fahrzeugreifens mit Profilpositiven wie Profilblöcken oder Laufstreifenbändern, welche wenigstens einen Feineinschnitt (1) aufweisen, welcher sich von der Laufstreifenperipherie (5) nach radial innen erstreckt und in seinem Tiefenverlauf im Wesentlichen aus zwei Abschnitten (6, 7) besteht:
- einem ersten Abschnitt (6), welcher von der Laufstreifenperipherie (5) aus beginnt und in welchem der Feineinschnitt (1) in etwa eine gleichbleibende Breite (b1) aufweist,
- einem zweiten Abschnitt (7), welcher sich an den ersten Abschnitt (6) anschließt und in welchem der Feineinschnitt (1) eine größere Breite (b2) als in dem ersten Abschnitt (b1) aufweist, und wobei der Übergang von dem ersten Abschnitt (6) zu dem zweiten Abschnitt (7) durch Radien gebildet ist
und wobei der Feinschnitt (1) radial verlaufende Verengungen (8) aufweist, welche über die Längserstreckung des Feineinschnittes (1) beabstandet voneinander angeordnet sind, **dadurch gekennzeichnet, dass**
die Verengungen (8) über den gesamten Tiefenverlauf des Feineinschnittes (1) ausgebildet sind.

2. Laufstreifenprofil nach Anspruch 1,
**dadurch gekennzeichnet, dass** der zweite Abschnitt (7) im Querschnitt die Form eines Dreieckes, eines Ovals, eines Kreises oder eines Rechteckes aufweist, wobei die Ecken vorzugsweise gerundet ausgebildet sind.

3. Laufstreifenprofil nach Anspruch 1 oder 2, **dadurch gekennzeichnet, dass** der erste Abschnitt (6) eine radiale Erstreckung von mindestens 2 mm bis 19,5 mm aufweist, vorzugsweise bei einem Laufstreifenprofil eines PKW-Reifens zwischen 2 mm und 5 mm und vorzugsweise bei einem Laufstreifenprofil eines LKW-Reifens zwischen 5 mm und 19,5 mm aufweist.

4. Laufstreifenprofil nach einem oder mehreren der vorangehenden Ansprüche, **dadurch gekennzeichnet, dass** der zweite Abschnitt (7) eine radiale Erstreckung von mindestens 2 mm bis 11 mm aufweist, vorzugsweise bei einem Laufstreifenprofil eines PKW-Reifens zwischen 2 mm und 6 mm und vorzugsweise bei einem Laufstreifenprofil eines LKW-Reifens zwischen 2 mm und 11 mm aufweist.

5. Laufstreifenprofil nach einem oder mehreren der vorangehenden Ansprüche, **dadurch gekennzeichnet, dass** zwei bis zehn Verengungen (8) pro Feineinschnitt (1) vorgesehen sind, vorzugsweise bei einem Laufstreifenprofil eines PKW-Reifens zwischen zwei und fünf Verengungen (8) und vorzugsweise bei einem Laufstreifenprofil eines LKW-Reifens zwischen vier und zehn Verengungen (8).

6. Laufstreifenprofil nach einem oder mehreren der vorangehenden Ansprüche, **dadurch gekennzeichnet, dass** die Verengungen (8) an beiden Feineinschnittwänden (2, 3) symmetrisch und gegengleich angeordnet sind.

7. Laufstreifenprofil nach einem oder mehreren der vorangehenden Ansprüche, **dadurch gekennzeichnet, dass** die Übergänge zu der Verengung (8) durch Radien gebildet sind.

8. Laufstreifenprofil nach einem oder mehreren der vorangehenden Ansprüche, **dadurch gekennzeichnet, dass** der Feineinschnitt (1) im ersten Abschnitt (6) außerhalb der Verengungen (8) eine Breite (b1) von 0,4 mm bis 2,5 mm, vorzugsweise bei einem Laufstreifenprofil eines PKW-Reifens zwischen 0,4 mm und 1,8 mm, besonders bevorzugt von 0,8 mm und vorzugsweise bei einem Laufstreifenprofil eines LKW-Reifens zwischen 0,8 mm und 2,5 mm, besonders bevorzugt von 1,2 mm aufweist.

9. Laufstreifenprofil nach einem oder mehreren der vorangehenden Ansprüche, **dadurch gekennzeichnet, dass** der Feineinschnitt (1) im ersten Abschnitt (6) im Bereich der Verengung (8) eine Breite (b1E) von 0,1 mm bis 1 mm, vorzugsweise bei einem Laufstreifenprofil eines PKW-Reifens zwischen 0,1 mm und 0,5 mm, besonders bevorzugt von 0,3 mm und vorzugsweise bei einem Laufstreifenprofil eines LKW-Reifens zwischen 0,5 mm und 1 mm aufweist.

10. Laufstreifenprofil nach einem oder mehreren der vorangehenden Ansprüche, **dadurch gekennzeichnet, dass** die Verengungen (8) einen Abstand von 5 mm bis 30 mm aufweisen, gemessen in Längserstreckung des Feineinschnittes (1).

11. Laufstreifenprofil nach einem oder mehreren der vorangehenden Ansprüche, **dadurch gekennzeichnet, dass** die Tiefe der Verengung (T), gemessen senkrecht auf die Feineinschnittwand (2, 3) von dieser beginnend, über den radialen Verlauf des Feineinschnittes (1) gleich ist.

12. Fahrzeugluftreifen, **dadurch gekennzeichnet, dass** dieser ein Laufstreifenprofil gemäß eines oder mehrerer der vorangehenden Ansprüche aufweist.

13. Fahrzeugluftreifen nach Anspruch 12, **dadurch gekennzeichnet dass** dieser ein Nutzfahrzeugreifen oder ein PKW-Reifen ist.

## Claims

1. Tread profile of a vehicle tyre, having profile positives such as profile blocks or tread bands which have at least one sipe (1) which extends radially inward from the tread periphery (5) and which, in its depth profile, is composed substantially of two sections (6, 7):
- a first section (6) which proceeds from the tread periphery (5) and in which the sipe (1) has an approximately constant width (b1),
- a second section (7) which adjoins the first section (6) and in which the sipe (1) has a greater width (b2) than in the first section (b1), and wherein the transition from the first section (6) to the second section (7) is formed by radii,
and wherein the sipe (1) has radially running narrowed portions (8) which are arranged spaced apart from one another over the longitudinal extent of the sipe (1), **characterized in that** the narrowed portions (8) are formed over the entire depth profile of the sipe (1).

2. Tread profile according to Claim 1,
**characterized in that** the second section (7) has a triangular, oval, circular or rectangular shape in cross section, wherein the corners are preferably of rounded form.

3. Tread profile according to Claim 1 or 2, **characterized in that** the first section (6) has a radial extent of at least 2 mm to 19.5 mm, preferably of between 2 mm and 5 mm in the case of a tread profile of a passenger vehicle tyre and preferably of between 5 mm and 19.5 mm in the case of a tread profile of a heavy goods vehicle tyre.

4. Tread profile according to one or more of the preceding claims, **characterized in that** the second section (7) has a radial extent of at least 2 mm to 11 mm, preferably of between 2 mm and 6 mm in the case of a tread profile of a passenger vehicle tyre and preferably of between 2 mm and 11 mm in the case of a tread profile of a heavy goods vehicle tyre.

5. Tread profile according to one or more of the preceding claims, **characterized in that** two to ten narrowed portions (8) are provided per sipe (1), preferably between two and five narrowed portions (8) in the case of a tread profile of a passenger vehicle tyre and preferably between four and ten narrowed portions (8) in the case of a tread profile of a heavy goods vehicle tyre.

6. Tread profile according to one or more of the preceding claims, **characterized in that** the narrowed portions (8) are arranged in symmetrical and mirror-inverted form on both sipe walls (2, 3).

7. Tread profile according to one or more of the preceding claims, **characterized in that** the transitions to the narrowed portion (8) are formed by radii.

8. Tread profile according to one or more of the preceding claims, **characterized in that**, in the first section (6), the sipe (1) has, outside the narrowed portions (8), a width (b1) of 0.4 mm to 2.5 mm, preferably of between 0.4 mm and 1.8 mm, particularly preferably of 0.8 mm, in the case of a tread profile of a passenger vehicle tyre, and preferably of between 0.8 mm and 2.5 mm, particularly preferably of 1.2 mm, in the case of a tread profile of a heavy goods vehicle tyre.

9. Tread profile according to one or more of the preceding claims, **characterized in that**, in the first section (6), the sipe (1) has, in the region of the narrowed portion (8), a width (b1E) of 0.1 mm to 1 mm, preferably of between 0.1 mm and 0.5 mm, particularly preferably of 0.3 mm, in the case of a tread profile of a passenger vehicle tyre, and preferably of between 0.5 mm and 1 mm in the case of a tread profile of a heavy goods vehicle tyre.

10. Tread profile according to one or more of the preceding claims, **characterized in that** the narrowed portions (8) have a spacing of 5 mm to 30 mm as measured in the longitudinal extent of the sipe (1).

11. Tread profile according to one or more of the preceding claims, **characterized in that** the depth of the narrowed portion (T) measured perpendicularly to and proceeding from the sipe wall (2, 3) is constant over the radial profile of the sipe (1).

12. Pneumatic vehicle tyre, **characterized in that** said pneumatic vehicle tyre has a tread profile according to one or more of the preceding claims.

13. Pneumatic vehicle tyre according to Claim 12, **characterized in that** said pneumatic vehicle tyre is a utility vehicle tyre or a passenger vehicle tyre.

## Revendications

1. Profil de bande de roulement d'un pneumatique de véhicule avec des parties de profil positives comme des blocs profilés ou des bandes de la bande de roulement, qui présentent au moins une fine entaille (1), qui s'étend à partir de la périphérie de la bande de roulement (5) vers une région radialement intérieure et dont le cours de la profondeur se compose essentiellement de deux parties (6, 7):
- une première partie (6), qui commence à partir de la périphérie de la bande de roulement (5) et dans laquelle la fine entaille (1) présente une largeur sensiblement constante (b1),
- une deuxième partie (7), qui se raccorde à la première partie (6) et dans laquelle la fine entaille (1) présente une plus grande largeur (b2) que dans la première partie (b1), et dans lequel la transition de la première partie (6) à la deuxième partie (7) est formée par des rayons,
et dans lequel la fine entaille (1) présente des rétrécissements (8) s'étendant radialement, qui sont disposés à distance l'un de l'autre sur l'extension longitudinale de la fine entaille (1),
**caractérisé en ce que** les rétrécissements (8) sont formés sur tout le cours de la profondeur de la fine entaille (1).

2. Profil de bande de roulement selon la revendication 1, **caractérisé en ce que** la deuxième partie (7) présente en section transversale la forme d'un triangle, d'un ovale, d'un cercle ou d'un rectangle, dans lequel les angles sont de préférence de forme arrondie.

3. Profil de bande de roulement selon la revendication 1 ou 2, **caractérisé en ce que** la première partie (6) présente une extension radiale d'au moins 2 mm à 19,5 mm, de préférence pour un profil de bande de roulement d'un pneumatique de voiture entre 2 mm et 5 mm et de préférence pour un profil de bande de roulement d'un pneumatique pour camion entre 5 mm et 19, 5mm.

4. Profil de bande de roulement selon une ou plusieurs des revendications précédentes, **caractérisé en ce que** la deuxième partie (7) présente une extension radiale d'au moins 2 mm à 11 mm, de préférence pour un profil de bande de roulement d'un pneumatique de voiture entre 2 mm et 6 mm et de préférence pour un profil de bande de roulement d'un pneumatique de camion entre 2 mm et 11 mm.

5. Profil de bande de roulement selon une ou plusieurs des revendications précédentes, **caractérisé en ce qu'**il est prévu deux à dix rétrécissements (8) par fine entaille (1), de préférence entre deux et cinq rétrécissements (8) pour un profil de bande de roulement d'un pneumatique de voiture et de préférence entre quatre et dix rétrécissements (8) pour un profil de bande de roulement d'un pneumatique de camion.

6. Profil de bande de roulement selon une ou plusieurs des revendications précédentes, **caractérisé en ce que** les rétrécissements (8) sont disposés de façon symétrique et diamétralement opposée sur les deux parois (2, 3) de la fine entaille.

7. Profil de bande de roulement selon une ou plusieurs des revendications précédentes, **caractérisé en ce que** les transitions avec le rétrécissement (8) sont formés par des rayons.

8. Profil de bande de roulement selon une ou plusieurs des revendications précédentes, **caractérisé en ce que** la fine entaille (1) présente dans la première partie (6) à l'extérieur des rétrécissements (8) une largeur (b1) de 0,4 mm à 2,5 mm, de préférence entre 0,4 mm et 1,8 mm, en particulier de préférence de 0,8 mm pour un profil de bande de roulement d'un pneumatique de voiture et de préférence entre 0,8 mm et 2,5 mm, en particulier de préférence de 1,2 mm pour un profil de bande de roulement d'un pneumatique de camion.

9. Profil de bande de roulement selon une ou plusieurs des revendications précédentes, **caractérisé en ce que** la fine entaille (1) présente dans la première partie (6), dans la région du rétrécissement (8), une largeur (b1E) de 0,1 mm à 1 mm, de préférence entre 0,1 mm et 0,5 mm, en particulier de préférence de 0,3 mm pour un profil de bande de roulement d'un pneumatique de voiture et de préférence entre 0,5 mm et 1 mm pour un profil de bande de roulement d'un pneumatique de camion.

10. Profil de bande de roulement selon une ou plusieurs des revendications précédentes, **caractérisé en ce que** les rétrécissements (8) présentent une distance de 5 mm à 30 mm, mesurée dans la direction longitudinale de la fine entaille (1).

11. Profil de bande de roulement selon une ou plusieurs des revendications précédentes, **caractérisé en ce que** la profondeur du rétrécissement (T), mesurée perpendiculairement à la paroi (2, 3) de la fine entaille à partir de celle-ci, est identique sur le cours radial de la fine entaille (1).

12. Pneumatique de véhicule, **caractérisé en ce qu'**il présente un profil de bande de roulement selon une ou plusieurs des revendications précédentes.

13. Pneumatique de véhicule selon la revendication 12, **caractérisé en ce qu'**il est un pneumatique de véhicule utilitaire ou un pneumatique de voiture.
